# FASCICULE DE BREVET EUROPEEN

(11) **EP 3 945 935 B1**
(45) Date de publication et mention de la délivrance du brevet: **09.10.2024**
(21) Numéro de dépôt: 20713923.9
(22) Date de dépôt: 01.04.2020
(51) Int. Cl.: A47B 13/00, F16B 12/20, A47B 3/12

(54) **TABLE DÉMONTABLE COMPRENANT DES FIXATIONS RAPIDES DU PLATEAU SUR UNE STRUCTURE**
ZERLEGBARER TISCH MIT SCHNELLBEFESTIGUNGSMITTELN ZUM BEFESTIGEN DER TISCHPLATTE AN EINER STRUKTUR
DISMANTLABLE TABLE COMPRISING QUICK FASTENING MEANS FOR FASTENING THE TABLETOP TO A STRUCTURE

(30) Priorité: 01.04.2019 FR 1903439
(43) Date de publication de la demande: 09.02.2022
(73) Titulaire: Lafuma Mobilier SAS, 26140 Anneyron (FR)
(72) Inventeur: NELTNER, Jean-Baptiste, 69230 Saint Genis Laval (FR); ROANI, Corrado, 26210 Manthes (FR); PERNET, Jean-Noël, 01430 Condamine la Doye (FR)
(74) Mandataire: Germain Maureau
(86) Numéro de dépôt international: PCT/EP2020/059204
(87) Numéro de publication internationale: WO 2020/201324

(56) Documents cités:
- EP-A1- 1 192 874
- DE-U1- 202005 009 719

## Description

La présente invention concerne une table démontable ainsi qu'un procédé d'assemblage d'une telle table.

Certaines tables, en particulier les tables de jardin, comportent un plateau qui peut être facilement démonté afin de réaliser différentes configurations en ajoutant des rallonges, ou pour replier la table afin de la ranger quand elle n'est plus en service. Ce type de table démontable peut être utilisé aussi en intérieur, par exemple en bureau ou en table d'appoint.

De plus le démontage de la table facilite son emballage et son transport. En réalisant par exemple une structure plate de soubassement recevant au-dessus le plateau et aux angles les pieds, on peut séparer ces éléments pour les emballer dans des cartons plats qui seront facilement stockés et transportés.

Pour fixer le plateau sur la structure, il est connu de prévoir des vis venant par en dessous dans des perçages de cette structure, qui s'engagent dans des filetages de la face inférieure du plateau. On visse alors ces vis avec une clé ce qui est relativement long à effectuer, et peu pratique pour des tables devant être démontées fréquemment.

De plus ce système de fixation nécessite une certaine longueur de filetage, ce qui impose une épaisseur suffisante au niveau des fixations. Le plateau devient plus encombrant dans son épaisseur, son stockage ou son transport n'est pas facilité.

Il est connu de réaliser d'autres systèmes de fixation du plateau sur la structure, comprenant par exemple sur un élément un verrou coulissant qui s'engage dans un perçage de l'autre élément. Toutefois ce système de verrou ne permet pas de positionner facilement le plateau sur la structure, et peut présenter une épaisseur importante. Le document EP1192874 A1 divulgue ? une table comprenant un autre système de fixation connu.

La présente invention a notamment pour but d'éviter ces inconvénients de la technique antérieure.

Elle propose à cet effet une table démontable selon la revendication 1.

Un avantage de la table selon l'invention est qu'avec un verrou formant une unique pièce, on peut simplement après avoir posé le plateau sur la structure, engager pour chaque fixation les bossages au fond du creux en mettant le verrou dans sa position de montage, puis après une fraction de tour de ce verrou effectuée manuellement de manière rapide, engager les bossages latéraux au-dessus des saillies en effectuant un serrage axial de ces bossages sur le fond du creux. En même temps le plan d'appui inférieur du verrou vient sous le rebord de la structure, pour la maintenir.

On peut réaliser aussi un auto-centrage de chaque verrou dans son creux, et un auto-alignement de la structure par rapport aux différents verrous.

On réalise de manière rapide et sans outillage, un positionnement et un serrage efficace du plateau sur la structure. En prévoyant des creux de faible profondeur dans l'épaisseur du plateau, on obtient un système de fixation très plat qui n'augmente pas l'épaisseur de ce plateau.

La table selon l'invention peut comporter de plus une ou plusieurs des caractéristiques suivantes, qui peuvent être combinées entre elles. Avantageusement, le verrou comporte deux bossages opposés venant dans la position de blocage chacun au-dessus d'une saillie.

Avantageusement, chaque bossage comporte une face inférieure inclinée en direction de l'axe de rotation du verrou, chaque saillie comprenant une face supérieure inclinée suivant le même angle.

Avantageusement, chaque verrou comporte un plan d'appui supérieur disposé au-dessus du plan d'appui inférieur, venant en appui sur la face inférieure du plateau.

Avantageusement, le verrou étant allongé suivant une direction transversale, chaque extrémité comporte un plan d'appui inférieur.

Dans ce cas, avantageusement chaque plan d'appui inférieur se termine vers l'avant dans le sens de la rotation de blocage, par une face inclinée qui descend vers le bas.

Avantageusement, le contour radialement extérieur de chaque verrou comporte un rayon croissant qui vient progressivement en appui lors de la rotation de blocage de ce verrou sur un côté du cadre.

Avantageusement, la face supérieure du verrou comporte des plots élastiques dépassant au-dessus de cette face.

Avantageusement, le cadre comporte des profilés extrudés comprenant le rebord formé dans ces profilés.

L'invention a aussi pour objet un procédé d'assemblage d'un plateau de table démontable selon la revendication 10.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente successivement en perspective et en vue de dessous une table selon l'invention comprenant un plateau en deux parties posé sur une structure courte ;
[Fig. 2] présente successivement en perspective et en vue de dessous une table suivant une variante avec le plateau en trois parties comprenant une rallonge centrale ;
[Fig. 3] présente successivement en perspective et en vue de dessous une table suivant une variante avec un plateau en trois parties posé sur une structure longue ;
[Fig. 4] présente successivement en perspective et en vue de dessous cette table avec un plateau en quatre parties ;
[Fig. 5] présente en vue de dessous un angle de la table comprenant une fixation du plateau sur la structure ;
[Fig. 6] présente successivement en perspective, en vue de dessous et en vue de côté un verrou de cette fixation.
[Fig. 7] présente en coupe suivant l'axe du verrou, la fixation lors du positionnement de ce verrou ;
[Fig. 8] présente en coupe suivant l'axe du verrou la fixation tournée en début de serrage ; et
[Fig. 9] présente en coupe suivant l'axe du verrou la fixation tournée en fin de serrage.

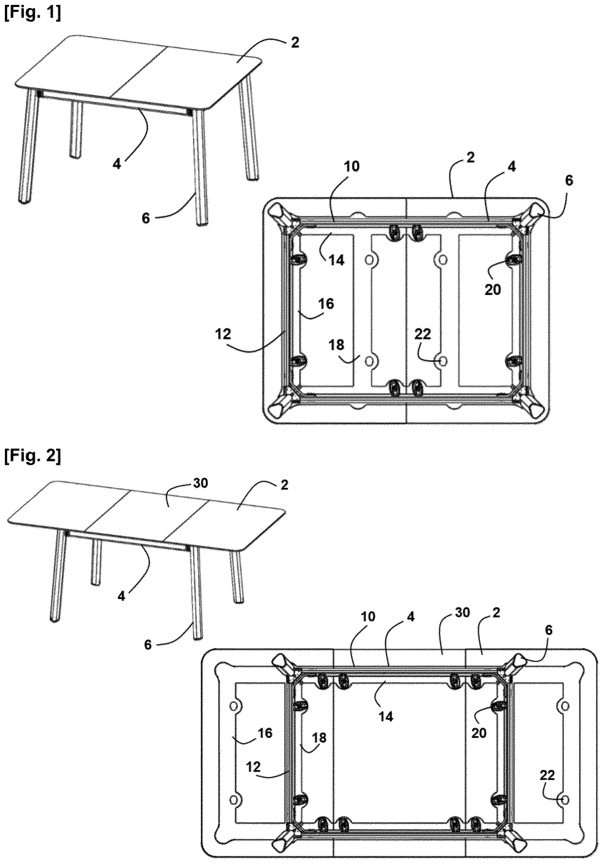

La figure 1 présente une table rectangulaire présentant un plan médian de symétrie disposé suivant la direction transversale, comprenant un plateau formé de deux éléments 2, fixé sur une structure plate 4 recevant à chaque angle un pied 6.

La structure 4 forme un rectangle comprenant deux longerons 10 reliés par deux traverses 12, ces longerons et ces traverses étant formés dans un même profilé réalisé en alliage d'aluminium.

Le dessous du plateau présente une surface de fixation de la structure 4 formant un rectangle comprenant deux parties longitudinales 14 s'ajustant sur les longerons 10, deux parties transversales intérieures 18, et deux parties transversales d'extrémité 16 recevant chacune une traverse 12 de la structure 4.

La surface de fixation du plateau comporte des creux 22 pouvant recevoir de manière modulaire des fixations rapides 20, qui vont en même temps serrer un rebord des profilés de cette structure et prendre appui sur le côté de ces profilés, pour assurer à la fois un positionnement latéral et un maintien efficace du plateau sur cette structure.

Chaque partie transversale 16, 18 de la surface de fixation du plateau comporte deux creux 22. Chaque partie longitudinale 10 de la surface de fixation comporte un creux 22 disposé près du plan médian de la table.

Des fixations 20 sont disposées sur les creux 22 des deux parties transversales d'extrémité 16 et ceux des parties longitudinales 14.

La figure 2 présente une table avec la même structure 4, recevant une rallonge formant un élément central 30 intercalé entre les deux éléments d'extrémité du plateau 2.

Chaque élément de plateau 2 est fixé par les creux 22 de la partie transversale intérieure 18 de la surface de fixation, et ceux des parties longitudinales 14. La rallonge 30 comporte deux parties longitudinales 14 de la surface de fixation, comprenant chacune un creux 22 à chaque extrémité, recevant une fixation 20.

De cette manière on utilise la même structure 4 pour fixer de manière rapide deux ou trois éléments formant le plateau. Les profilés de la structure présentant une section constante peuvent recevoir en tout point les fixations 20, ce qui apporte une grande modularité à la table. De plus les longerons 10 et les traverses 12 de la structure 4 formés par des profilés découpés à une longueur quelconque à la demande, permettent de réaliser toute dimension de table.

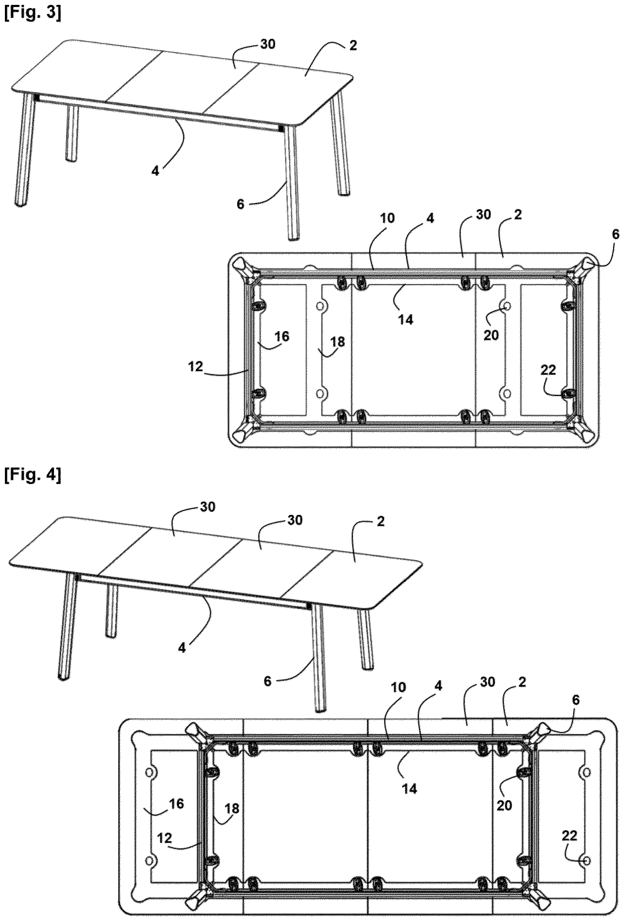

La figure 3 présente une structure longue 4, recevant le même plateau formé de trois éléments 2, 30 présentés figure 2. Les traverses 12 de la structure 4 sont fixées sur les parties transversales d'extrémité 16 des éléments d'extrémité 2 du plateau, ce qui donne une plus grande stabilité à ce plateau.

La figure 4 présente la même structure longue 4 de la table présentée figure 3, recevant deux éléments centraux 30 formant deux rallonges intercalées entre deux éléments d'extrémité du plateau 2. Les traverses 12 de la structure 4 sont fixées sur les parties transversales intérieures 18 des éléments d'extrémité 2.

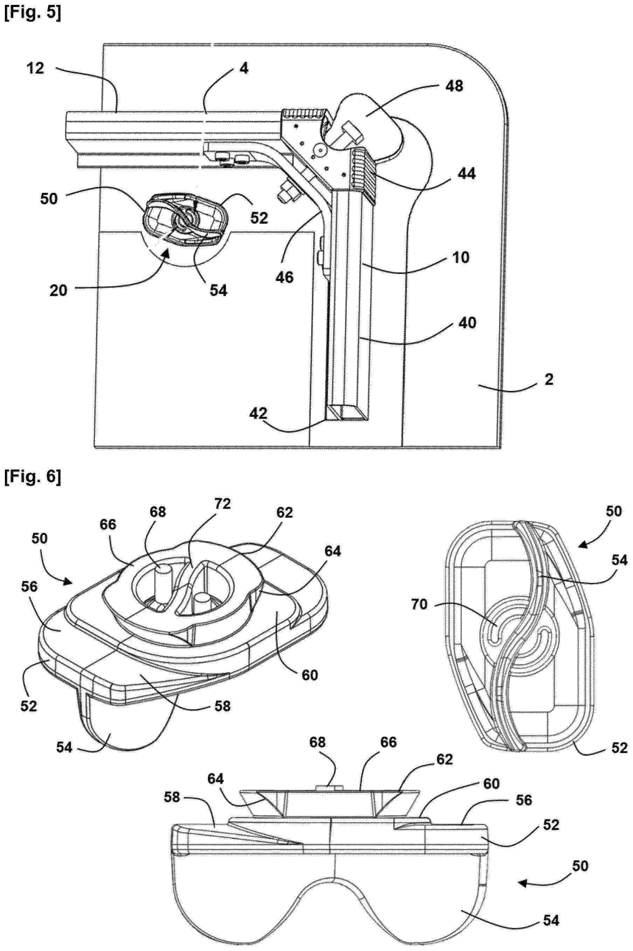

La figure 5 présente un angle de la table comprenant deux profilés de section identiques 40 se rejoignant pour former l'angle, formés par un alliage d'aluminium extrudé présentant une section rectangulaire disposée verticalement, et un rebord 42 tourné vers l'intérieur de la table, posé à plat sous le plateau.

La liaison d'angle entre les profilés 40 comporte une pièce de liaison 44 guidant les côtés extérieurs des profilés, et une bande de serrage 46 vissée sur les côtés intérieurs de ces profilés. Une vis avec une ailette 48 disposée dans le plan médian entre les deux profilés 40, serre la pièce de liaison 44 et la bande de serrage 46 l'une vers l'autre.

La fixation 20 comporte un verrou 50 rotatif suivant un axe vertical, présentant une forme allongée transversalement disposée dans la position de montage présentée sur cette figure, parallèlement à une traverse 12, recevant sous une plaque horizontale 52 deux ailettes courbées 54 alignées suivant l'élongation de la forme, permettant d'appliquer un effort manuel de rotation sur ce verrou. La figure 6 présente le verrou 50 comprenant sur la plaque 52 successivement en partant du haut, une forme circulaire centrale 66 comportant deux bossages latéraux opposés 62 s'étendant chacun sur environ un quart de tour, un plan d'appui supérieur 60 dépassant autour de cette forme circulaire, puis un plan d'appui inférieur 56 en deux parties, couvrant uniquement les extrémités allongées de la plaque.

Le dessous des bossages 62 présente une face inférieure 64 inclinée à 30° par rapport à la verticale vers l'axe de rotation du verrou 50. La hauteur entre le plan d'appui supérieur 60 et le plan d'appui inférieur 56 est égal à l'épaisseur du rebord 42 des profilés 40. Chaque partie du plan d'appui inférieur 56 se termine vers l'avant dans le sens de la rotation de blocage, par une face légèrement inclinée 58 qui descend vers le bas.

Le centre de la forme circulaire supérieure 66 comporte une barrette 72 disposée suivant un diamètre, laissant de chaque côté un creux recevant chacun un plot vertical 68 dont l'extrémité supérieure dépasse au-dessus de la face supérieure de cette forme circulaire.

Une languette flexible 70 en arc de cercle centré sur l'axe du verrou 50, disposée dans un plan horizontal, relie l'extrémité inférieure de chaque plot 68 à la barrette 72 de manière à permettre un enfoncement élastique du plot vers le bas en descendant son extrémité supérieure vers la face supérieure de la forme circulaire 66, pour former un dispositif élastique de rattrapage de jeu.

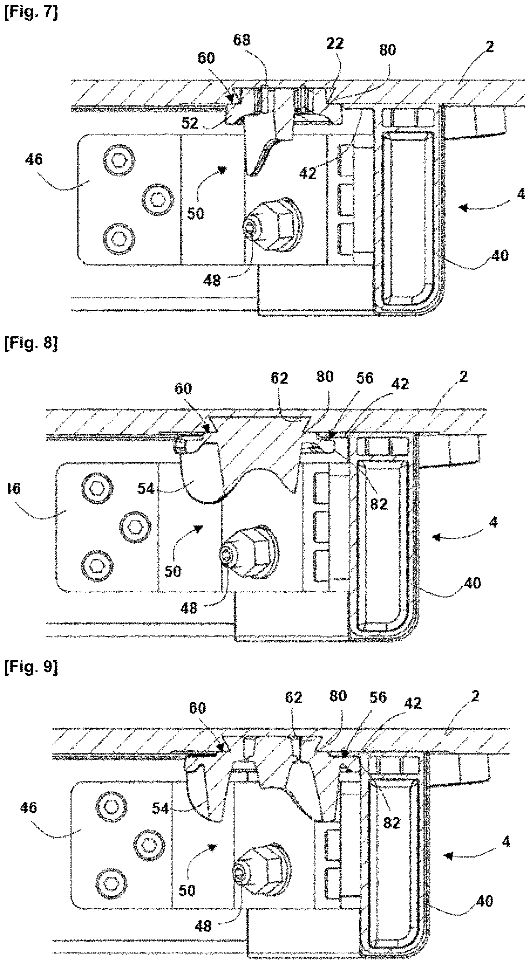

La figure 7 présente le creux 22 formé par usinage dans l'épaisseur du plateau, sur environ les deux tiers de cette épaisseur, présentant un fond plat. De cette manière on obtient des éléments 2, 30 du plateau présentant un dessous entièrement lisse, ce qui facilite l'emballage, le stockage ou le transport.

Le creux 22 de forme globalement circulaire, comporte sur deux côtés opposés une saillie 80 tournée vers le centre, s'étendant chacune sur environ un quart de tour, présentant une face supérieure inclinée à 30° par rapport à l'axe vertical.

De cette manière le verrou 50 permet dans une position de montage de rentrer dans le creux 22 en disposant ses bossages latéraux 62 entre les saillies 80, présentée figure 7. Le plan d'appui supérieur 60 est en appui sous la face plate du panneau.

La figure 8 présente après une rotation du verrou 50, les bossages 62 qui se sont glissés au-dessus des saillies 80 avec les pentes à 30° ajustées l'une sur l'autre, en assurant un auto-centrage du verrou dans le creux 22 grâce à ces pentes, et un maintien axial efficace de ce verrou qui ne peut ressortir.

En même temps la face légèrement inclinée 58 d'un des deux plans d'appui inférieurs 56 arrive en dessous du rebord 42 du profilé 40, cette pente formant un chanfrein d'entrée facilitant le passage sous ce rebord.

La figure 9 présente la rotation sur un peu moins d'un quart de tour du verrou 50, qui confirme le positionnement d'un plan d'appui inférieur 56 sous le rebord 42 du profilé 40.

Chaque partie allongée du verrou 50 présente un contour radialement extérieur 82 comprenant un rayon croissant, formant une petite pente de manière à obtenir lors de la rotation de ce verrou un rayon qui augmente, et un serrage latéral progressif sur le bord du profilé 40.

On réalise ainsi en fin de rotation de tous les verrous 50, pour chaque fixation 20 à la fois un serrage axial du plateau sous le rebord 42 du profilé 40, et un calage latéral de ce plateau sur la structure 4. Chaque élément 2, 30 du plateau est ainsi rigidement fixé à la structure 4 par quatre fixations 20, ce qui forme un ensemble très rigide.

Lors du montage de chaque verrou 50 les plots 68 montés sur les languettes élastiques 70 dépassant au-dessus de la face supérieure de la forme circulaire 66, compriment leurs languettes en prenant appui sur le fond du creux 22. De cette manière on maintient une pression axiale sur le verrou 50 vers le bas, en rattrapant des éventuels jeux axiaux des bossages 62 au-dessus des saillies 80, qui empêche la libre rotation du verrou, par des vibrations notamment. Les verrous 50 sont aussi maintenus de cette manière dans les creux 22 lorsque la structure 4 n'est pas montée, par exemple pour stocker le plateau avec ses verrous restant fixés dessous.

On obtient de manière simple, rapide et sans outillage une table modulaire comprenant un nombre d'éléments 2, 30 formant le plateau qui peut être variable, en utilisant des profilés 40 présentant pour les longerons 10 des longueurs ajustées à ce nombre d'éléments.

## Revendications

1. Table démontable comprenant un plateau fixé par des fixations (20) sur une structure (4) formant un cadre, la structure (4) comportant un rebord (42) venant à plat sous le plateau, chaque fixation (20) comprenant un verrou (50) rotatif suivant un axe de rotation qui est vertical, présentant au moins un bossage (62) dépassant latéralement, et comprenant un creux (22), formé dans l'épaisseur du plateau et débouchant dans la face inférieure du plateau, présentant au moins une saillie (80) formée dans l'épaisseur du plateau et tournée vers l'axe de rotation, dans une position de montage l'au moins un bossage (62) de chaque verrou (50) rentrant dans le creux (22) respectif à côté de l'au moins une saillie (80) respective, et dans une position de blocage après une rotation l'au moins un bossage (62) de chaque verrou (50) s'ajustant au-dessus de l'au moins une saillie (80) respective, un plan d'appui inférieur (56) de chaque verrou (50) venant sous le rebord (42) de la structure (4).

2. Table selon la revendication 1, dans laquelle chaque verrou (50) comporte deux bossages opposés (62) venant dans la position de blocage chacun au-dessus d'une saillie (80) respective.

3. Table selon la revendication 1 ou 2, dans laquelle chaque bossage (62) comporte une face inférieure (64) inclinée en direction de l'axe de rotation du verrou (50) respectif, chaque saillie (80) comprenant une face supérieure inclinée suivant le même angle.

4. Table selon l'une quelconque des revendications précédentes, dans laquelle chaque verrou (50) comporte un plan d'appui supérieur (60) disposé au-dessus du plan d'appui inférieur (56) respectif, venant en appui sur la face inférieure du plateau.

5. Table selon l'une quelconque des revendications précédentes, dans laquelle chaque verrou (50) étant allongé suivant une direction transversale, chaque extrémité de chaque verrou (50) comporte un plan d'appui inférieur (56).

6. Table selon la revendication 5, dans laquelle chaque plan d'appui inférieur (56) se termine vers l'avant dans le sens de la rotation de blocage, par une face inclinée (58) qui descend vers le bas.

7. Table selon l'une quelconque des revendications précédentes, dans laquelle le contour radialement extérieur (82) de chaque verrou (50) comporte un rayon croissant qui vient progressivement en appui lors de la rotation de blocage de ce verrou (50) sur un côté du cadre (4).

8. Table selon l'une quelconque des revendications précédentes, dans laquelle la face supérieure de chaque verrou (50) comporte des plots élastiques (68) dépassant au-dessus de cette face supérieure.

9. Table selon l'une quelconque des revendications précédentes, dans laquelle le cadre (4) comporte des profilés extrudés (40) comprenant le rebord (42) formé dans ces profilés.

10. Procédé d'assemblage d'un plateau de table démontable sur une structure (4) au moyen de fixations (20), la structure (4) comprenant un rebord (42) venant à plat sous le plateau, pour chaque fixation (20) le procédé comporte une étape d'introduction d'une partie supérieure d'un verrou (50) rotatif suivant un axe de rotation qui est vertical, comprenant au moins un bossage (62) dépassant latéralement, dans un creux (22), formé dans l'épaisseur du plateau et débouchant dans la face inférieure du plateau, présentant au moins une saillie (80) formée dans l'épaisseur du plateau et tournée vers l'axe de rotation, puis une étape de rotation du verrou (50) vers une position de blocage, introduisant l'au moins un bossage (62) au-dessus de l'au moins une saillie (80) respective, et glissant un plan d'appui inférieur (56) du verrou (50) sous le rebord (42) de la structure (4).

## Patentansprüche

1. Demontierbarer Tisch, der eine Platte umfasst, die durch Befestigungselemente (20) an einer einen Rahmen bildenden Struktur (4) befestigt ist, wobei die Struktur (4) eine Kante (42) aufweist, die flach unter der Platte liegt, wobei jedes Befestigungselement (20) einen Riegel (50) umfasst, der entlang einer vertikalen Drehachse drehbar ist, mindestens eine Ausbuchtung (62) aufweist, die seitlich vorsteht, und eine Vertiefung (22) umfasst, die in der Dicke der Platte ausgebildet ist und in die Unterseite der Platte mündet, die mindestens einen Vorsprung (80) aufweist, der in der Dicke der Platte ausgebildet ist und zur Drehachse hin gerichtet ist, wobei die mindestens eine Ausbuchtung (62) jedes Riegels (50) in einer Montageposition in die jeweilige Vertiefung (22) neben dem mindestens einen jeweiligen Vorsprung (80) zurückkehrt und in einer Blockierposition nach der Drehung die mindestens eine Ausbuchtung (62) jedes Riegels (50) über den mindestens einen jeweiligen Vorsprung (80) passt, wobei eine untere Auflagefläche (56) jedes Riegels (50) unter die Kante (42) der Struktur (4) kommt.

2. Tisch nach Anspruch 1, wobei jeder Riegel (50) zwei gegenüberliegende Ausbuchtungen (62) aufweist, die in der Blockierposition jeweils über einem jeweiligen Vorsprung (80) stehen.

3. Tisch nach Anspruch 1 oder 2, wobei jede Ausbuchtung (62) eine Unterseite (64) aufweist, die in Richtung der Drehachse des jeweiligen Riegels (50) geneigt ist, wobei jeder Vorsprung (80) eine Oberseite umfasst, die im gleichen Winkel geneigt ist.

4. Tisch nach einem der vorhergehenden Ansprüche, wobei jeder Riegel (50) eine obere Auflagefläche (60) aufweist, die über der jeweiligen unteren Auflagefläche (56) angeordnet ist und an der Unterseite der Platte anliegt.

5. Tisch nach einem der vorhergehenden Ansprüche, wobei jeder Riegel (50) entlang einer Querrichtung verlängert ist, wobei jedes Ende jedes Riegels (50) eine untere Auflagefläche (56) aufweist.

6. Tisch nach Anspruch 5, wobei jede untere Auflagefläche (56) nach vorne in Richtung der Blockierdrehung durch eine geneigte Fläche (58) endet, die nach unten abfällt.

7. Tisch nach einem der vorhergehenden Ansprüche, wobei die radial äußere Kontur (82) jedes Riegels (50) einen zunehmenden Radius aufweist, der während der Blockierdrehung dieses Riegels (50) allmählich auf einer Seite des Rahmens (4) zum Anliegen kommt.

8. Tisch nach einem der vorhergehenden Ansprüche, wobei die Oberseite jedes Riegels (50) elastische Zapfen (68) aufweist, die über diese Oberseite hinausragen.

9. Tisch nach einem der vorhergehenden Ansprüche, wobei der Rahmen (4) extrudierte Profile (40) aufweist, die die in diesen extrudierten Profilen ausgebildete Kante (42) umfassen.

10. Verfahren zum Montieren einer demontierbaren Tischplatte auf einer Struktur (4) durch Befestigungselemente (20), wobei die Struktur (4) eine Kante (42) umfasst, die flach unter der Platte liegt, wobei das Verfahren für jedes Befestigungselement (20) einen Schritt des Einführens eines oberen Teils eines Riegels (50), der entlang einer vertikalen Drehachse drehbar ist, mindestens eine Ausbuchtung (62) umfasst, die seitlich vorsteht, in eine Vertiefung (22), die in der Dicke der Platte ausgebildet ist und in die Unterseite der Platte mündet, die mindestens einen Vorsprung (80) aufweist, der in der Dicke der Platte ausgebildet ist und zur Drehachse hin gerichtet ist, und dann einen Schritt des Drehens des Riegels (50) in Richtung einer Blockierposition umfasst, in der die mindestens eine Ausbuchtung (62) über den mindestens einen jeweiligen Vorsprung (80) eingeführt wird und auf einer unteren Auflagefläche (56) des Riegels (50) unter die Kante (42) der Struktur (4) gleitet.

## Claims

1. A dismountable table comprising a tabletop fastened by fasteners (20) on a structure (4) forming a frame, the structure (4) including a flange (42) coming flat under the tabletop, each fastener (20) comprising a latch (50), rotatable along an axis of rotation which is vertical, having at least one boss (62) projecting laterally, and comprising a recess (22), formed across the thickness of the tabletop and emerging in the lower face of the tabletop, having at least one protrusion (80) formed across the thickness of the tabletop and oriented towards the axis of rotation, in a mounting position the at least one boss (62) of each latch (50) fitting into the respective recess (22) next to the respective at least one protrusion (80), and in a blocking position after rotation the at least one boss (62) of each latch (50) fitting above the respective at least one protrusion (80), a lower bearing plane (56) of each latch (50) coming under the flange (42) of the structure (4).

2. The table according to claim 1, wherein each latch (50) includes two opposed bosses (62) coming, in the blocking position, each above a respective protrusion (80).

3. The table according to claim 1 or 2, wherein each boss (62) includes a lower face (64) tilted towards the axis of rotation of the respective latch (50), each protrusion (80) comprising an upper face tilted at the same angle.

4. The table according to any one of the preceding claims, wherein each latch (50) includes an upper bearing plane (60) disposed above the respective lower bearing plane (56), bearing against the lower face of the tabletop.

5. The table according to any one of the preceding claims, wherein each latch (50) being elongated along a transverse direction, each end of each latch (50) includes a lower bearing plane (56).

6. The table according to claim 5, wherein each lower bearing plane (56) terminates forwards in the direction of the blocking rotation, with a tilted face (58) which descends downwards.

7. The table according to any one of the preceding claims, wherein the radially outer outline (82) of each latch (50) includes an increasing radius which gradually comes to bear, during the blocking rotation of this latch (50), on one side of the frame (4).

8. The table according to any one of the preceding claims, wherein the upper face of each latch (50) includes elastic studs (68) projecting above this upper face.

9. The table according to any one of the preceding claims, wherein the frame (4) includes extruded profiles (40) comprising the flange (42) formed in these profiles.

10. A method for assembling a dismountable tabletop on a structure (4) by means of fasteners (20), the structure (4) comprising a flange (42) coming flat under the tabletop, for each fastener (20) the method includes a step of inserting an upper portion of a latch (50), rotatable along an axis of rotation which is vertical, comprising at least one boss (62) projecting laterally, in a recess (22), formed across the thickness of the tabletop and emerging in the lower face of the tabletop, having at least one protrusion (80) formed across the thickness of the tabletop and oriented towards the axis of rotation, then a step of rotating the latch (50) towards a blocking position, inserting the at least one boss (62) above the at least one protrusion (80), and sliding a lower bearing plane (56) of the latch (50) under the flange (42) of the structure (4).
